# EUROPEAN PATENT APPLICATION

(11) **EP 4 691 925 A1**
(43) Date of publication of application: **11.02.2026**
(21) Application number: 24382891.0
(22) Date of filing: 08.08.2024
(51) Int. Cl.: B65B 51/16, B29C 65/00, B65B 51/30, B65B 65/02

(54) **PACKAGING MACHINE**

(71) Applicant: Ulma Packaging, S.Coop., 20560 Oñati (ES)
(72) Inventor: JORGE GABILONDO, Asier, 20560 OÑATI (ES); ARZUAGA CORRALES, Iñaki, 20560 OÑATI (ES); MURGIA MENDIZABAL, Aritz, 20560 OÑATI (ES)
(74) Representative: Galbaian S.Coop.

(57) **Abstract**

The invention relates to a packaging machine (1000) with a sealing and cutting assembly (100) comprising a first rotating assembly with a first axis of rotation (1.0) and a first actuation tool (1.1) rotating with respect to the first axis of rotation (1.0), a second rotating assembly with a second axis of rotation (2.0) and a second actuation tool (2.1) rotating with respect to the second axis of rotation (2.0), and a transmission system (4) comprising two gearwheels (4.21, 4.22) associated with the second actuation tool (2.1), one of said gearwheels (4.21, 4.22) being associated with freedom of rotation. The sealing and cutting assembly (100) comprises an adjustment actuator (5) for causing a relative rotation between said gearwheels (4.21, 4.22).

## Description

### TECHNICAL FIELD

The present invention relates to packaging machines.

### PRIOR ART

Different types of packaging machines are known for packaging products. One type of packaging machine is that which packages products in a continuous film, generating pillow packs, for example, among others: for this purpose, the longitudinal edges of the film are sealed by means of a longitudinal sealing assembly, resulting in a film tube, and with the product inside the film tube, this film tube is acted upon by means of a sealing and cutting assembly with which a transversal cut of the film tube is made, separating it into two, and a transversal seal on each side of the cut. The transversal seal on one side of the cut closes one end of the film tube, and the other seal closes a second end of a package which is physically separated from the film tube by the transversal cut. The first end of the package has been closed in the previous operation of the sealing and cutting assembly and corresponds to the end of the film tube that has been sealed in that previous operation.

In some cases, the sealing and cutting assembly comprises two rotating assemblies between which the film tube moves. Each rotating assembly comprises an axis of rotation and an actuation tool that rotates relative to the corresponding axis of rotation. The actuation tools are configured so that in a rotating position they cooperate with each other to perform the previously described sealing and cutting operation on said film tube, and for this purpose the axes of rotation are parallel and distanced from each other a determined vertical distance which depends on the characteristics of the film on which the rotating assemblies have to act when cooperating with each other.

It is therefore common to have to adjust the position of at least one of the two rotating assemblies, in particular to adjust the position of its axis of rotation with respect to the axis of rotation of the other rotating assembly so that both axes of rotation are parallel and at the corresponding determined distance from each other.

Such a packaging machine comprises an actuator for causing a first rotating assembly to rotate and a transmission system for transmitting this rotation to a second rotating assembly. The transmission system typically comprises a gearwheel which rotates in conjunction with the first rotating assembly with respect to the corresponding axis of rotation, and a second gearwheel which rotates in conjunction with the second rotating assembly with respect to the corresponding axis of rotation. The second gearwheel is meshed with the first gearwheel in such a way that it rotates in conjunction with the first gearwheel and thus transmits the rotation of the first rotating assembly to the second rotating assembly.

US3641857A discloses a packaging machine with such a sealing and cutting assembly, comprising a first rotating assembly with a first axis of rotation and a first actuation tool, a second rotating assembly with a second axis of rotation and a second actuation tool, an actuator for causing the first rotating assembly to rotate about its axis of rotation, and a transmission system for transmitting such rotation to the second rotating assembly.

### DISCLOSURE OF THE INVENTION

The object of the invention is to provide a packaging machine as defined in the claims.

The packaging machine comprises a sealing and cutting assembly comprising a first rotating assembly with a first axis of rotation and a first actuation tool, a second rotating assembly with a second axis of rotation and a second actuation tool, an actuator associated with the first rotating assembly and configured to cause the first actuation tool to rotate relative to the first axis of rotation, and a transmission system for transmitting such rotation to the second actuation tool and thereby causing the second actuation tool to rotate relative to the second axis of rotation.

The transmission system comprises a first transmission assembly with a driving gearwheel attached to the first rotating assembly and a second transmission assembly associated with the second rotating assembly and configured to cooperate with the driving gearwheel.

The second transmission assembly comprises a first gearwheel which rotates relative to the second axis of rotation and which is attached to the second rotating assembly such that the second actuation tool rotates in conjunction with the first gearwheel, and a second gearwheel adjacent to the first gearwheel. Both gearwheels of the second transmission assembly are concentric and are engaged with the driving gearwheel, and the relative angular position between the gearwheels of the second transmission assembly is adjustable. The gearwheels of the transmission system preferably comprise an equal tooth pitch and tooth pitch, so that the gearwheels of the two transmission assemblies are complementary.

In practice, it is common to have to adjust at least the position between the first axis of rotation and the second axis of rotation, depending on the characteristics of the film (thickness, material, etc.) for example, and this may require at least one of the axes of rotation to be shifted with respect to the other axis of rotation by reducing or increasing the distance between these axes of rotation. Changing the distance between these axes of rotation also changes the lateral play between the teeth of the driving gearwheel of the first transmission assembly and the teeth of the gearwheels of the second transmission assembly, because the teeth of the gearwheels of the second transmission assembly change the level of engagement between two adjacent teeth of the driving gearwheel. This lateral play affects the accuracy of the actuation tools during sealing and cutting of the film (the greater the lateral play, the lower the accuracy), as the pressure generated between the actuation tools to seal the film can cause free or uncontrolled movement between the teeth of the cooperating gearwheels, resulting in damage to the actuation tools and/or incorrect sealing.

Until now, to at least partially avoid this problem, once the position of one of the actuation tools had been adjusted with respect to the other actuation tool (and therefore the position of one axis of rotation with respect to the other), a gearwheel was manually pressed so that its teeth contacted the teeth of the other gearwheel and this relative position between the two wheels was blocked by fixing the gearwheel associated with the actuation tool whose position had been adjusted (with the possibility of rotation but not displacement), This prevented subsequent simple and rapid modification of the sealing and cutting assembly configuration to work with different blades.

The sealing and cutting assembly of the proposed packaging machine facilitates this task, thanks to having two gearwheels in the second transmission assembly instead of a single gearwheel and thanks to the possibility of adjusting the relative angular position between these two gearwheels, in such a way that the change of position between the two axes of rotation can be carried out in a simple and effortless way, also allowing the sealing and cutting assembly to be readjusted as many times as required to use different films of different materials, thicknesses, etc. and without any possible lateral play negatively affecting the precision described above.

The sealing and cutting assembly comprises at least one actuator configured to act on at least one of the gearwheels of the second transmission assembly and to cause with said actuation a relative rotation between said gearwheels with respect to the second axis of rotation, thereby adjusting the angular position between the two gearwheels.

By causing the relative rotation, a tooth of one of the gearwheels of the second transmission assembly which is engaged between two teeth of the driving gearwheel of the first transmission assembly is in contact with one of said teeth of the driving gearwheel of the first transmission assembly, and one tooth of the other gearwheel of the second transmission assembly which is also engaged between the said two teeth of the driving gearwheel of the first transmission assembly is in contact with the other of said teeth of the said driving gearwheel, thus preventing free movement between the driving gearwheel and the gearwheels of the second transmission assembly (one gearwheel prevents free movement in one direction and the other gearwheel prevents free movement in the other direction). By keeping the gearwheels of the second transmission assembly in this position, the rotation of the first rotating assembly is perfectly transmitted to the second rotating assembly and the above-mentioned problem is avoided.

If readjustment of the position of the second transmission assembly is required, it is sufficient to release the adjustment of the angular position between the gearwheels of the second transmission assembly first, which can be done for example by causing the actuator to stop acting, and then, having adjusted the position as required, to cause the actuator to act again to bring the two gearwheels of the second transmission assembly into contact with teeth of the driving gearwheel of the first transmission assembly as described above.

The actuator simply needs to be actuated to lock or release the angular position adjustment between the gearwheels of the second transmission assembly, and this can be done simply, quickly and safely.

These and other advantages and features of the invention will become apparent in view of the figures and the detailed description of the invention.

### DESCRIPTION OF THE DRAWINGS

Figure 1 shows an embodiment of a packaging machine according to the invention.
Figure 2 is a perspective view of a sealing and cutting assembly of the packaging machine of figure 1.
Figure 3 shows a relationship between the actuation tools of the two rotating assemblies of the sealing and cutting assembly of figure 2, in three different positions.
Figure 4 is a perspective view of a transmission system of the sealing and cutting assembly of figure 2.
Figure 5 is a front view of the transmission system shown in figure 4.
Figure 6 shows a detail of a cooperation between the gearwheels of the transmission system of figure 4.
Figure 7 is a view according to section B-B of figure 5.
Figure 8 is a view according to section A-A of figure 5.
Figure 9 shows an actuation drive of the packaging machine of figure 1.

### DETAILED DISCLOSURE OF THE INVENTION

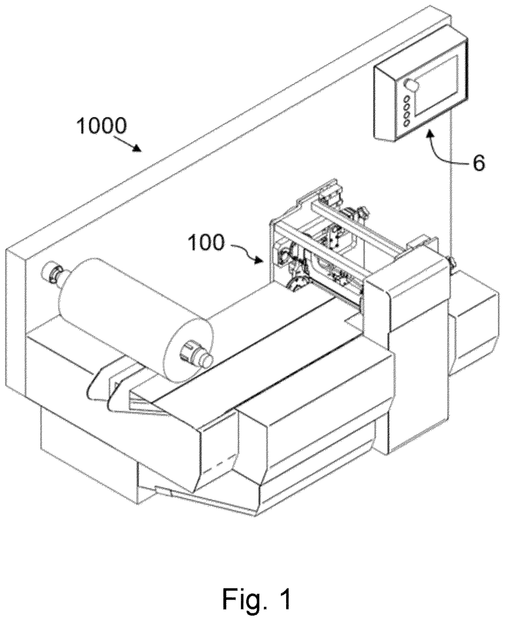

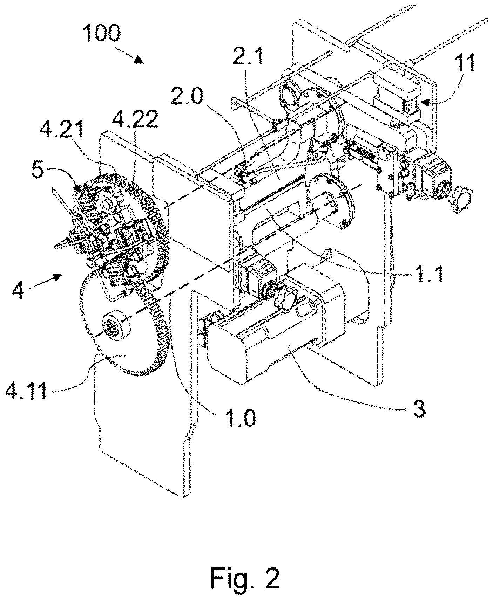

The proposed packaging machine 1000, as the one shown in figure 1 by way of example, comprises a sealing and cutting assembly 100. Referring to figure 2, the sealing and cutting assembly 100 comprises a first rotating assembly 1 with a first axis of rotation 1.0 and at least a first actuation tool 1.1, a second rotating assembly 2 with a second axis of rotation 2.0 and at least a second actuation tool 2.1, an actuator 3 associated with the first rotating assembly 1 to cause the first rotating assembly 1 to rotate with respect to the axis of rotation 1.0, and a transmission system 4 for transmitting such rotation to the second rotating assembly 2 and for causing the second actuation tool 2.1 to rotate with respect to the second axis of rotation 2.0. In this way, the two rotating assemblies 1 and 2 rotate simultaneously. The axes of rotation 1.0 and 2.0 are spaced apart, preferably in a vertical direction.

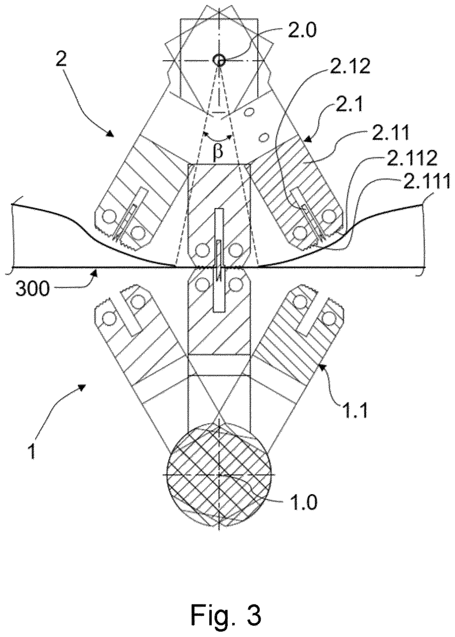

The actuation tools 1.1 and 2.1 are configured to cooperate during rotation of the rotating assemblies 1 and 2 in a given position as shown in figure 3 (or over an angular range β of positions). Each actuation tool 1.1 and 2.1 protrudes from the axes of rotation 1.0 and 2.0 corresponding in a direction radial to said axes of rotation 1.0 and 2.0, and the rotating assemblies 1 and 2 are configured so that the two actuation tools 1.1 and 2.1 cooperate with each other when their radial directions are aligned and opposite. Preferably the cooperation occurs over a given angular range β with centre at said position where said radial directions are aligned and opposite, as depicted in figure 3.

In a packaging machine 1000 with two rotating assemblies 1 and 2 as described, a film tube 300 with the products to be packaged inside is passed between the two rotating assemblies 1 and 2 (products not shown in the figures), and when the actuation tools 1.1 and 2.1 of the rotating assemblies 1 and 2 cooperate with each other, they transversely cut the film tube 300 and transversely seal the film tube 300 on both sides of the transversal cut. This results in a separate, closed container downstream of the transversal cut and a film tube 300 closed at one end upstream of the cross section.

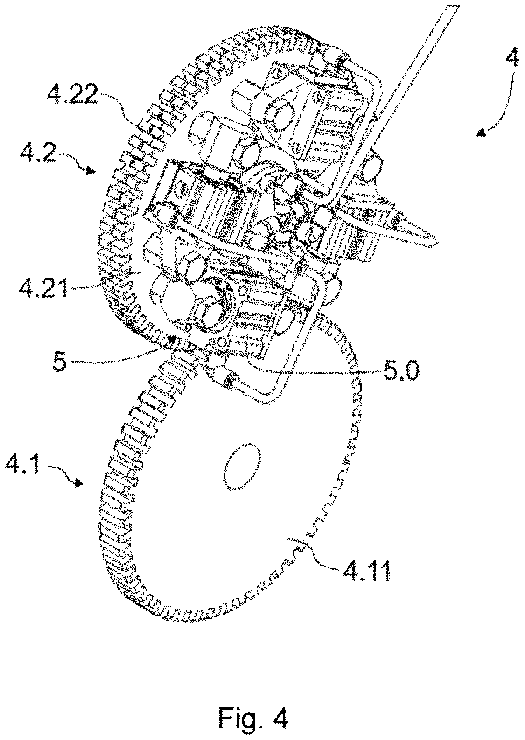

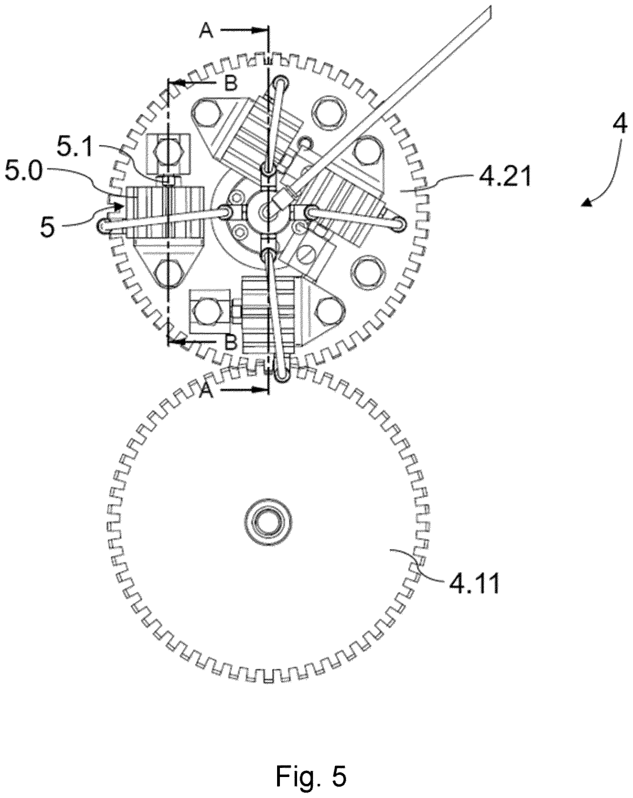

The transmission system 4, as shown in figures 4 and 5, comprises a first transmission assembly 4.1 with a driving gearwheel 4.11 attached to the first rotating assembly 1 and a second transmission assembly 4.2 associated with the second rotating assembly 2 and configured to cooperate with the driving gearwheel 4.11.

The second transmission assembly 4.2 comprises a first gearwheel 4.21 attached to the second rotating assembly 2 such that the second actuation tool 2.1 and the first gearwheel 4.21 rotate in conjunction with respect to the second axis of rotation 2.0, and a second gearwheel 4.22 adjacent and concentric to the first gearwheel 4.21. Both gearwheels 4.21 and 4.22 are meshed with the driving gearwheel 4.11, and the relative angular position between said gearwheels 4.21 and 4.22 is adjustable. The fact that one gearwheel is engaged with another gearwheel means that the teeth of one gearwheel are inserted into the pitch between the teeth of the other gearwheel, thus causing the rotation of one gearwheel to rotate the other gearwheel due to this cooperation between the teeth of both gearwheels.

The sealing and cutting assembly 100 comprises at least one adjustment actuator 5 which is configured to act on at least one of the two gearwheels 4.21 and 4.22 of the second transmission assembly 4.2 and to cause with said actuation a relative rotation between the two gearwheels 4.21 and 4.22 with respect to the second axis of rotation 2.0, the angular position between the two gearwheels 4.21 and 4.22 being adjusted. In other embodiments, the adjustment actuator 5 may cause the two gearwheels 4.21 and 4.22 to rotate relative to the second axis of rotation 2.0, but in opposite directions.

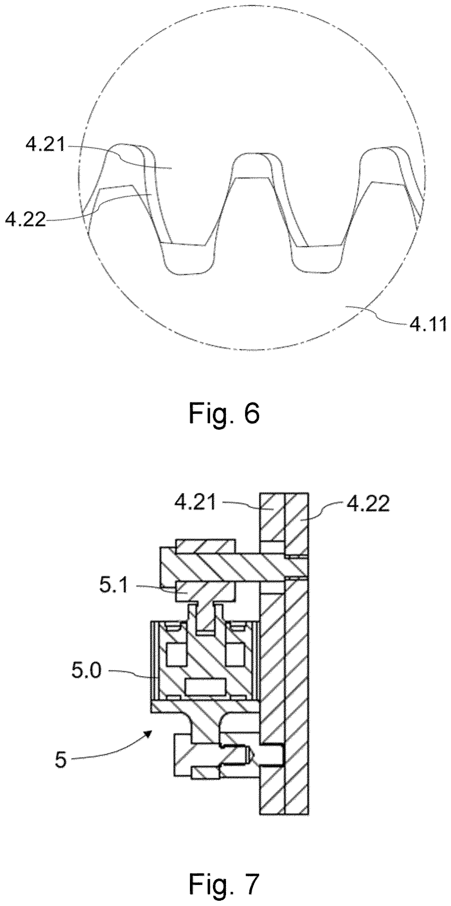

Thus, when a tooth of each gearwheel 4.21 and 4.22 of the second transmission assembly 4.2 is engaged between two teeth of the first driving gearwheel 4.11 (in a pitch of the first driving gearwheel 4.11), the teeth of the gearwheels 4.21 and 4.22 are forced to contact a respective tooth of the first driving gearwheel 4.11 by the actuation of the adjustment actuator 5 (see figure 6). Thus, when the tooth of the first gearwheel 4.21 is in contact with a tooth of the driving gearwheel 4.11, said first gearwheel 4.21 prevents free movement between both transmission assemblies 4.1 and 4.2 in one direction, and when the tooth of the second gearwheel 4.22 is in contact with the other tooth of the driving gearwheel 4.11, said second gearwheel 4.22 prevents free movement between both transmission assemblies 4.1 and 4.2 in the opposite direction. The actuator 5, while acting, holds the gearwheels 4.21 and 4.22 in this position relative to the driving gearwheel 4.11, and if the adjustment actuator 5 is caused to stop acting, the gearwheels 4.21 and 4.22 are released so that their relative angular position can be adjusted and a new adjustment can easily be made.

The adjustment actuator 5 preferably comprises a cylinder with a housing 5.0 attached to one of the gearwheels 4.21 and 4.22 of the second transmission assembly 4.2 (preferably to the first gearwheel 4.21), and a piston rod 5.1 which is displaceable with respect to the housing 5.0 and which is attached to the other gearwheel 4.21 or 4.22 of the second transmission assembly 4.2 (see figure 7). For this purpose, preferably at least one of the gearwheels 4.21 or 4.22 comprises a through hole through which the adjustment actuator 5 joins with the gearwheel 4.21 or 4.22. When the adjustment actuator 5 is actuated, the piston rod 5.1 extends with respect to the housing 5.0, whereas when it is no longer actuated the piston rod 5.1 retracts or can be easily retracted as it is not forced into an extended position. For this purpose, the dimension of the through hole allows a relative movement between both gearwheels 4.21 and 4.22 when the adjustment actuator 5 is actuated. Preferably the adjustment actuator 5 is actuated by means of a fluid, such as pressurised air, in this case being a pneumatic actuator (a pneumatic cylinder).

Preferably the sealing and cutting assembly 100 comprises a plurality of adjustment actuators 5 (see figures 4 and 5), such that the force required for the teeth of the gearwheels 4.21 and 4.22 of the second transmission assembly 4.2 to press against the teeth of the driving gearwheel 4.11 of the first transmission assembly 4.1 is distributed among said adjustment actuators 5, whereby adjustment actuators 5 of a lower force and thus more compact can be used. Preferably, in these embodiments all the adjustment actuators 5 are connected to the same fluid source.

The packaging machine 1000 comprises a control unit 6 configured to control the supply of fluid to the adjustment actuator 5. In this way the control unit 6, can cause fluid to arrive at the adjustment actuator 5 when required, for example when the packaging machine 1000 has been adjusted and is to be put into operation, thereby causing actuation of said adjustment actuator 5, or can cause fluid arrival at the adjustment actuator 5 to cease in order to stop actuation of said adjustment actuator 5 when, for example, readjustment of the sealing and cutting assembly 100 is required to change a packaging film to another of different material, thickness, etc.

The sealing and cutting assembly 100 preferably comprises a controllable electro valve not depicted in the figures, between the fluid source and the adjustment actuator 5 of said sealing and cutting assembly 100, the control unit 6 being communicated with said electro valve and being configured to control the closing and opening of said electro valve, causing simultaneous actuation of all adjustment actuators 5. Alternatively, the sealing and cutting assembly 100 may comprise a controllable electro valve not shown in the figures, between the fluid source and each adjustment actuator 5 of said sealing and cutting assembly 100, the control unit 6 being communicated with said electro valves and being configured to control the closing and opening of said electro valves. Preferably the control unit 6 is configured to cause simultaneous actuation of the adjustment actuators 5.

The adjustment control unit 6 may comprise for example a microprocessor, a controller, an FPGA or any other computationally capable device.

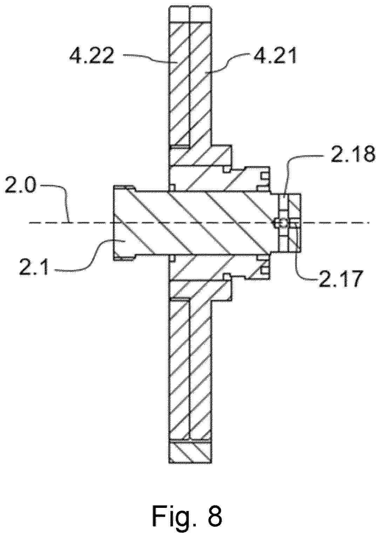

As shown in figure 8, the second actuation tool 2.1 of the second rotating assembly 2 comprises a longitudinal bore 2.17 which is in communication with the fluid source and which extends along the second axis of rotation 2.0 from the side of the second actuation tool 2.1 closest to the first gearwheel 4.21 and the second gearwheel 4.22 of the second transmission assembly 4.2, and at least one radial bore 2.18 which is in communication with the longitudinal bore 2.17 and with the corresponding adjustment actuator 5. The longitudinal bore 2.17 is rotatably connected to a conduit supplying fluid from the fluid source, so that it is possible in a simple manner to redirect the fluid from a fixed fluid source, to the corresponding adjustment actuators 5 rotating with the first gearwheel 4.21 and to the second gearwheel 4.22 during operation of the sealing and cutting assembly. This results in a compact sealing and cutting assembly 100 despite incorporating the adjustment actuator 5.

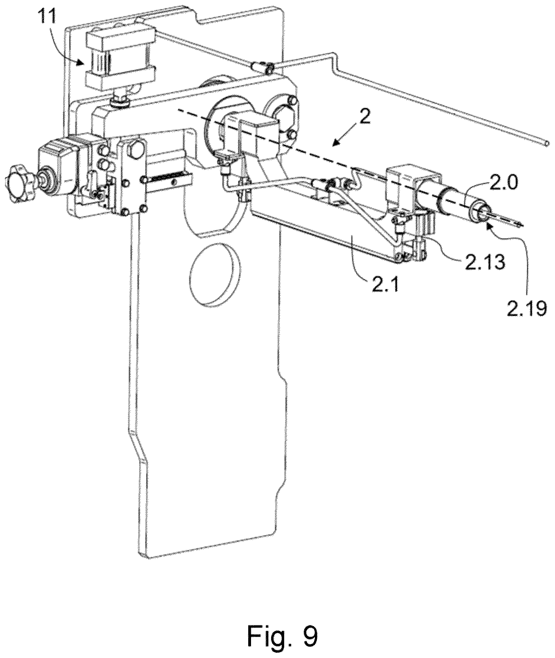

The second actuation tool 2.1 may comprise a sealing tool 2.11 having two sealing surfaces 2.111 and 2.112; a cutting tool 2.12, such as a blade, which is arranged between both sealing surfaces 2.111 and 2.112 and which is configured to move relative to the sealing tool 2.11 between an active position in which it protrudes from the sealing surfaces 2.111 and 2.112 of the sealing tool 2.11 and an inactive position in which it is retracted relative to the sealing surfaces 2.111 and 2.112 (see figure 3); and an actuation drive 2.13, depicted in figure 9, configured to act by means of the action of a fluid and to cause, with its actuation, the cutting tool 2.12 to move at least from the inactive position to the active position. In this way, by controlling the actuation of the actuation drive 2.13 it is possible to control the actuation of the cutting tool 2.12, which implies a more effective use of the cutting tool 2.12 and less wear of the cutting tool 2.12.

Preferably the adjustment actuator 5 and the actuation drive 2.13 of the second actuation tool 2.1 are connected to the same fluid source, the sealing and cutting assembly 100 being simplified.

Preferably the second actuation tool 2.1 comprises at least two actuation drives 2.13, one on each side of the cutting tool 2.12 in relation to the axis of rotation 2.0, both actuation drives 2.13 acting simultaneously. In this way, the size of the actuation drives 2.13 can be reduced compared to using a single actuation drive 2.13 by dividing the required force, and a correct actuation of the cutting tool 2.12 is ensured by being actuated simultaneously from both sides.

As shown in figure 9, the second actuation tool 2.1 of the second rotating assembly 2 comprises a longitudinal bore 2.19 extending along the second axis of rotation 2.0 from the side of the second actuation tool 2.1 furthest to the first gearwheel 4.21 and the second gearwheel 4.22 and communicated with the fluid source and the actuation drive 2.13. The longitudinal bore 2.19 may be rotatably connected to a conduit supplying fluid from the fluid source, and to a second conduit disposed above the second actuation tool 2.1 which directs the fluid to the corresponding actuation tool 2.13. The longitudinal bore 2.19 may be connected to a slip ring through which the second actuation tool 2.1 is supplied with electrical current to heat it, and the fluid source may be connected to the slip ring. In this way, it is possible to redirect the fluid from a fixed fluid source to the corresponding rotary actuator 2.13.

Preferably the packaging machine 100 comprises a control unit 6 configured to cause an actuation of the actuation drive 2.13 when the second actuation tool 2.1 is in an angular position in which it cooperates with the first actuation tool 1.1 to seal and cut a film arranged between both actuation tools 1.1 and 2.1. The control unit preferably communicates with a electro valve not shown in the figures and arranged in the fluid path between the fluid source and the actuation actuator 2.13, and is configured to control the opening and closing of said electro valve to open or close the fluid passage through it.

The packaging machine 100 may further comprise a pressure actuator 11 on each side of the actuation tool 2.1 of the second rotating assembly 2 relative to the second axis of rotation 2.0, as shown by way of example in figure 9. The pressure actuator 11 is configured to press the second rotating assembly 2 in a downward direction so that the second rotating assembly 2 exerts the required pressure against the first rotating assembly 1 when cooperating to perform the sealing. The pressure actuators 11 are fluid driven and are preferably connected to the same fluid source so that they can be actuated simultaneously. Preferably they are connected to the fluid source to which the adjustment actuator 5 is connected.

The control unit 6 may be additionally configured to simultaneously control the supply of fluid of the pressure actuator 11 and the supply of fluid of the actuators 5 and 11 are actuated and when a configuration change of the sealing and cutting assembly 100 is to be performed the actuators 5 and 11 are deactivated.

The packaging machine 100 may further comprise a controllable electro valve between the fluid source and the pressure actuator 11, the arrival of the fluid to the pressure actuator 11 being controlled by controlling the electro valve to open and close the fluid flow through it.

## Claims

1. Packaging machine comprising a sealing and cutting assembly (100), the sealing and cutting assembly (100) comprising a first rotating assembly (1) with a first axis of rotation (1.0) and at least a first actuation tool (1.1), a second rotating assembly (2) with a second axis of rotation (2.0) and at least a second actuation tool (2.1), an actuator (3) associated with the first rotating assembly (1) to cause the first actuation tool (1.1) to rotate relative to the axis of rotation (1.0), and a transmission system (4) for transmitting such rotation to the second actuation tool (2.1) and for causing the second actuation tool (2.1) to rotate relative to the second axis of rotation (2.0), the transmission system (4) comprising a first transmission assembly (4.1) with a driving gearwheel (4.11) attached to the first rotating assembly (1), and a second transmission assembly (4.2) associated with the second rotating assembly (2) and configured to cooperate with the driving gearwheel (4.11), **characterised in that** the second transmission assembly (4.2) comprises a first gearwheel (4.21) that rotates relative to the second axis of rotation (2.0) and that is connected to the second rotating assembly (2), and a second gearwheel (4.22) adjacent to the first gearwheel (4.21) of said second transmission assembly (4.2), both gearwheels (4.21, 4.22) of said second transmission assembly (4.2) being concentric and said gearwheels (4.21, 4.22) meshing with the driving gearwheel (4.11), wherein the relative angular position between said gearwheels (4.21, 4.22) is adjustable, the sealing and cutting assembly (100) comprising at least one adjustment actuator (5) configured to act on at least one of the gearwheels (4.21, 4.22) of the second transmission assembly (4.2) and causing with such actuation a relative rotation between said gearwheels (4.21, 4.22) with respect to the second axis of rotation (2.0).

2. Packaging machine according to claim 1, wherein the adjustment actuator (5) of the sealing and cutting assembly (100) comprises a cylinder with a housing (5.0) attached to one of the gearwheels (4.21, 4.22) of the second transmission assembly (4.2) and a piston rod (5.1) attached to the other gearwheel (4.21, 4.22) of the second transmission assembly (4.2), the housing (5.0) and the piston rod (5.1) being movable relative to each other (5.0).

3. Packaging machine according to claim 2, wherein the sealing and cutting assembly (100) comprises a plurality of adjustment actuators (5) configured to act on at least one of the gearwheels (4.21, 4.22) of the second transmission assembly (4.2) and to cause with said actuation a relative rotation between said gearwheels (4.21, 4.22) with respect to the second axis of rotation (2.0).

4. Packaging machine according to claim 2 or 3, wherein the adjustment actuator (5) is communicated with a fluid source, the adjustment actuator (5) being configured to be actuated by a fluid, preferably pressurised air.

5. Packaging machine according to claim 3, wherein all the adjustment actuators (5) are connected to the same fluid source, the adjustment actuators (5) being configured to be actuated by a fluid, preferably pressurised air.

6. Packaging machine according to claim 4 or 5, comprising a control unit (6) configured to control the supply of the fluid driving the adjustment actuator (5).

7. Packaging machine according to any of claims 4 to 6, wherein the second actuation tool (2.1) comprises a longitudinal bore (2.17) extending from the side of said second actuation tool (2.1) closest to the first gearwheel (4.21) and the second gearwheel (4.22) of the second transmission assembly (4.2), and a radial bore (2.18) which is in communication with the longitudinal bore (2.17) and the corresponding adjustment actuator (5), the longitudinal bore (2.17) being in communication with the fluid source.

8. Packaging machine according to any of claims 4 to 7, wherein the second actuation tool (2.1) comprises a sealing tool (2.11) having two sealing surfaces (2.111, 2.112); a cutting tool (2.12) arranged between both sealing surfaces (2.111, 2.112) and configured to move relative to the sealing tool (2.11) between an active position in which it protrudes from the sealing surfaces (2.111, 2.112) of said sealing tool (2.11) and an inactive position in which said cutting tool (2.12) is retracted relative to said sealing surfaces (2.111, 2.112); and at least one actuation drive (2.13) configured to act by the action of a fluid and to cause, with its actuation, the cutting tool (2.12) to move from at least the inactive position to the active position.

9. Packaging machine according to claim 8, wherein the adjustment actuator (5) and the actuation drive (2.13) of the second actuation tool (2.1) are connected to the same fluid source.

10. Packaging machine according to claim 9, wherein the second actuation tool (2.1) comprises an actuation drive (2.13) on each side of the cutting tool (2.12) relative to the axis of rotation (2.0).

11. Packaging machine according to claim 10, wherein the second actuation tool (2.1) comprises a longitudinal bore (2.19) extending along the second axis of rotation (2.0) from the side of said second actuation tool (2.1) furthest from the first gearwheel (4.21) and the second gearwheel (4.22), the longitudinal bore (2.19) being in communication with the fluid source and with the respective actuation drive (2.13) of the cutting tool (2.12).

12. Packaging machine according to claim 10 or 11, comprising a control unit configured to cause the supply of the fluid that actuates the actuation drive (2.13) of the second actuation tool (2.1) when the second actuation tool (2.1) is in an angular position in which it cooperates with the first actuation tool (1.1) to seal and cut a film arranged between the two actuation tools (1.1, 2.1).

13. Packaging machine according to any of claims 4 to 6, comprising a pressure actuator (11) on each side of the actuation tool (2.1) of the second rotating assembly (2), configured to press said second rotating assembly (2) in a downward direction, the pressure actuators (11) being fluid driven.

14. Packaging machine according to claim 13, wherein the pressure actuator (11) and the adjustment actuator (5) are connected to the same fluid source.

15. Packaging machine according to claim 13 or 14, comprising a control unit configured to simultaneously control the supply of the fluid driving the pressure actuator (11) and the adjustment actuator (5).

## Amended claims

### Amended claims in accordance with Rule 137(2) EPC.

1. Packaging machine comprising a sealing and cutting assembly (100), the sealing and cutting assembly (100) comprising a first rotating assembly (1) with a first axis of rotation (1.0) and at least a first actuation tool (1.1), a second rotating assembly (2) with a second axis of rotation (2.0) and at least a second actuation tool (2.1), an actuator (3) associated with the first rotating assembly (1) to cause the first actuation tool (1.1) to rotate relative to the axis of rotation (1.0), and a transmission system (4) for transmitting such rotation to the second actuation tool (2.1) and for causing the second actuation tool (2.1) to rotate relative to the second axis of rotation (2.0), the transmission system (4) comprising a first transmission assembly (4.1) with a driving gearwheel (4.11) attached to the first rotating assembly (1), and a second transmission assembly (4.2) associated with the second rotating assembly (2) and configured to cooperate with the driving gearwheel (4.11), the second transmission assembly (4.2) comprising a first gearwheel (4.21) that rotates relative to the second axis of rotation (2.0) and that is connected to the second rotating assembly (2), and a second gearwheel (4.22) adjacent to the first gearwheel (4.21) of said second transmission assembly (4.2), both gearwheels (4.21, 4.22) of said second transmission assembly (4.2) being concentric and said gearwheels (4.21, 4.22) meshing with the driving gearwheel (4.11), **characterised in that** the relative angular position between said gearwheels (4.21, 4.22) is adjustable, the sealing and cutting assembly (100) comprising at least one adjustment actuator (5) configured to act on at least one of the gearwheels (4.21, 4.22) of the second transmission assembly (4.2) and causing with such actuation a relative rotation between said gearwheels (4.21, 4.22) with respect to the second axis of rotation (2.0).

2. Packaging machine according to claim 1, wherein the adjustment actuator (5) of the sealing and cutting assembly (100) comprises a cylinder with a housing (5.0) attached to one of the gearwheels (4.21, 4.22) of the second transmission assembly (4.2) and a piston rod (5.1) attached to the other gearwheel (4.21, 4.22) of the second transmission assembly (4.2), the housing (5.0) and the piston rod (5.1) being movable relative to each other (5.0).

3. Packaging machine according to claim 2, wherein the sealing and cutting assembly (100) comprises a plurality of adjustment actuators (5) configured to act on at least one of the gearwheels (4.21, 4.22) of the second transmission assembly (4.2) and to cause with said actuation a relative rotation between said gearwheels (4.21, 4.22) with respect to the second axis of rotation (2.0).

4. Packaging machine according to claim 2 or 3, wherein the adjustment actuator (5) is communicated with a fluid source, the adjustment actuator (5) being configured to be actuated by a fluid, preferably pressurised air.

5. Packaging machine according to claim 3, wherein all the adjustment actuators (5) are connected to the same fluid source, the adjustment actuators (5) being configured to be actuated by a fluid, preferably pressurised air.

6. Packaging machine according to claim 4 or 5, comprising a control unit (6) configured to control the supply of the fluid driving the adjustment actuator (5).

7. Packaging machine according to any of claims 4 to 6, wherein the second actuation tool (2.1) comprises a longitudinal bore (2.17) extending from the side of said second actuation tool (2.1) closest to the first gearwheel (4.21) and the second gearwheel (4.22) of the second transmission assembly (4.2), and a radial bore (2.18) which is in communication with the longitudinal bore (2.17) and the corresponding adjustment actuator (5), the longitudinal bore (2.17) being in communication with the fluid source.

8. Packaging machine according to any of claims 4 to 7, wherein the second actuation tool (2.1) comprises a sealing tool (2.11) having two sealing surfaces (2.111, 2.112); a cutting tool (2.12) arranged between both sealing surfaces (2.111, 2.112) and configured to move relative to the sealing tool (2.11) between an active position in which it protrudes from the sealing surfaces (2.111, 2.112) of said sealing tool (2.11) and an inactive position in which said cutting tool (2.12) is retracted relative to said sealing surfaces (2.111, 2.112); and at least one actuation drive (2.13) configured to act by the action of a fluid and to cause, with its actuation, the cutting tool (2.12) to move from at least the inactive position to the active position.

9. Packaging machine according to claim 8, wherein the adjustment actuator (5) and the actuation drive (2.13) of the second actuation tool (2.1) are connected to the same fluid source.

10. Packaging machine according to claim 9, wherein the second actuation tool (2.1) comprises an actuation drive (2.13) on each side of the cutting tool (2.12) relative to the axis of rotation (2.0).

11. Packaging machine according to claim 10, wherein the second actuation tool (2.1) comprises a longitudinal bore (2.19) extending along the second axis of rotation (2.0) from the side of said second actuation tool (2.1) furthest from the first gearwheel (4.21) and the second gearwheel (4.22), the longitudinal bore (2.19) being in communication with the fluid source and with the respective actuation drive (2.13) of the cutting tool (2.12).

12. Packaging machine according to claim 10 or 11, comprising a control unit configured to cause the supply of the fluid that actuates the actuation drive (2.13) of the second actuation tool (2.1) when the second actuation tool (2.1) is in an angular position in which it cooperates with the first actuation tool (1.1) to seal and cut a film arranged between the two actuation tools (1.1, 2.1).

13. Packaging machine according to any of claims 4 to 6, comprising a pressure actuator (11) on each side of the actuation tool (2.1) of the second rotating assembly (2), configured to press said second rotating assembly (2) in a downward direction, the pressure actuators (11) being fluid driven.

14. Packaging machine according to claim 13, wherein the pressure actuator (11) and the adjustment actuator (5) are connected to the same fluid source.

15. Packaging machine according to claim 13 or 14, comprising a control unit configured to simultaneously control the supply of the fluid driving the pressure actuator (11) and the adjustment actuator (5).
